# EUROPEAN PATENT SPECIFICATION

(11) **EP 3 476 601 B1**
(45) Date of publication and mention of the grant of the patent: **11.03.2020**
(21) Application number: 17198474.3
(22) Date of filing: 26.10.2017
(51) Int. Cl.: B41F 23/00, B05D 3/06, B41F 23/04, B29C 65/14

(54) **UV CURING SYSTEM**
UV-AUSHÄRTUNGSSYSTEM
SYSTÈME DE DURCISSEMENT PAR UV

(43) Date of publication of application: 01.05.2019
(73) Proprietor: Vestel Elektronik Sanayi ve Ticaret A.S., 45030 Manisa (TR)
(72) Inventor: KUYUCU, Ömer Gökce, 45030 Manisa (TR)
(74) Representative: Ascherl, Andreas

(56) References cited:
- EP-A1- 1 847 368
- US-A- 5 809 784
- US-A- 5 985 376
- US-A1- 2010 242 299

## Description

This invention refers to a UV curing system according to claim 1.

### Background of the Invention

UV curing is a process in which ultraviolet light and visible light is used to initiate a photochemical reaction that generates a cross-linked network of polymers. UV Curing is adaptable to printing, coating, decorating, stereolithographic and assembling of a variety of products and materials owing to some of its key attributes, a high-speed process, and a solvent less process cure is by polymerization rather than by evaporation. The primary advantage of curing finishes and inks with ultraviolet lie in the speed at which the final product can be prepared for shipping. In addition to speeding up production, this also can reduce flaws and errors, as the amount of time that dust, flies or any airborne object has to settle upon the object is reduced. This can increase the quality of the finished item, and allow for greater consistency.

Further, many of industrial parts are produced in 3D shapes. If the UV light curing the parts cannot reach to shadowed areas, the paint shall not be cured onto these parts. This is unacceptable result because of smell and skin irritation due to improper curing of the 3D parts.

Also, while in operation, UV lamps used for emitting UV light have high operation temperatures. Temperature level goes rapidly high when parts are passing under the light source, and the curing process is taking place. This generated heat remains untapped with no utility.

US Patent Publication No. US4208587 discloses a method and an apparatus for curing three dimensional objects such as cylindrical two piece cans with ultraviolet light without having to rotate the cans, at conventional can line speeds and using a minimum number of lamp units. The cans are moved, without rotation, between at least a pair of ultraviolet lamp units so that the closest surfaces to the lamp units are substantially within the focal planes thereof. The lamp units are parallel to the direction of can movement or are rotated from that direction by a small angle with the lamp units of each pair being rotated by the same angle but in opposite senses. Each lamp unit, instead of being faced by another lamp unit, can also be faced by a reflector to increase the cure speed attainable with the same number of lamp units.

US Patent Publication No. US4575330 discloses a system for generating three-dimensional objects by creating a cross-sectional pattern of the object to be formed at a selected surface of a fluid medium capable of altering its physical state in response to appropriate synergistic stimulation by impinging radiation, particle bombardment or chemical reaction, successive adjacent laminae, representing corresponding successive adjacent cross-sections of the object, being automatically formed and integrated together to provide a step-wise laminar buildup of the desired object, whereby a three-dimensional object is formed and drawn from a substantially planar surface of the fluid medium during the forming process.

A UV curing system according to the preamble of claim 1 is also known from each of US5985376A, EP1847368A1 and US2010/242299.

### Object of the Invention

It is therefore the object of the present invention to provide for a system for curing of the UV objects by effectively utilizing temperature levels generated during UV curing process.

### Description of the Invention

The before mentioned object is solved by an UV curing system according to claim 1.

The UV curing system according to the invention comprises an UV lamp for generating an UV light to cure an object when the object passes under the UV light. The UV lamp is adapted to generate heat while generating the UV light. The UV curing system comprises an actuator adapted to receive heat from the UV lamp and to convert the heat energy to mechanical energy and to actuate a movement mechanism, wherein the movement mechanism, when actuated by the actuator, is adapted to move the object depending on the generated heat of the UV lamp.

This provides a mechanism for utilizing the heat produced by the UV lamp to enable the actuator to generate mechanical energy and actuate the movement mechanism for moving the objects being cured in an efficient and automated manner.

Further preferred embodiments are subject-matter of dependent claims and/or of the following specification parts.

According to a preferred embodiment of the system, the actuator comprises an expansion gas having high expansion coefficient in influence of when exposed to heat, the expansion gas is housed within a housing of the actuator. The actuator further comprises a piston having a piston head and a piston rod, the piston head is encapsulated within the housing of the actuator, the piston rod is in a movement coupling to the movement mechanism, such that when the exhaustion gas is expanded it exerts a first force onto the piston head in a first direction, and due to the pressure, the piston moves, which actuates the movement mechanism.

This embodiment is beneficial as it provides for an actuator which efficiently functions in temperature levels of UV lamps.

According to a further embodiment of the invention, the system comprises a spring adapted to exert a second force onto the piston head in a second direction opposite to the first direction.

This embodiment is helpful, as it provides for a mechanism to keep a check on movement of the piston, so as to actuate the movement mechanism as desired.

According to another embodiment of the invention, the system comprising a controller adapted to control intensity of the UV light generated from the UV lamp.

This embodiment is beneficial as it provides for the controller to control intensity of UV light, which also controls temperature levels of generated heat, and which in change regulates expansion of the expansion gas, and thus regulates movement of the movement mechanism.

According to a further preferred embodiment of the system, the controller is adapted to control intensity of the UV light at a predefined interval.

This embodiment is helpful, as it provides for an effective way to regulate the temperature levels in a time based manner, so that the expansion gas is expanded in such a way that the movement mechanism moves the object to a desired position and further stops for the time interval for curing. Thereafter when the position of the object is to be changed, the controller further regulates the intensity to change, so that the movement mechanism can be triggered to change the position of the object.

According to a further embodiment of the system, the controller is adapted to control intensity of the UV light by a predefined intensity level.

This embodiment is beneficial, as it helps to change the position of the object in a particular fashion. When the intensity of the UV lamp is changed to a predefined level, accordingly the movement mechanism is triggered, so that it shall move in a fashion to change the position of the object to a desired position.

According to another embodiment of the invention, the movement mechanism comprises a pushing arm with attaching provisions for attaching one or more objects, the pushing arm is in the movement coupling with the piston rod, wherein the pushing arm is adapted to move in direction of the movement of the piston rod, when actuated.

This embodiment is beneficial, as it provides an efficient way to move the object while being attached to the pushing arm, when the arm gets actuated by the actuator under influence of the temperature.

According to a further preferred embodiment of the system, the movement mechanism is adapted to move the object by rotating the objects.

The embodiment is beneficial, as rotating of object allows all surfaces of the object to be cured by rotating the objects and exposing them to UV light, and keep on rotating them till the object is rotated to cure all the surfaces of the objects required to be cured.

According to another embodiment of the invention, the movement mechanism is adapted to rotate the object by a predefined degree at once.

The embodiment is beneficial, as it provides for rotating the objects to a predefined degree, so that selectively all surfaces which are required to be cured can be brought under the exposure to UV light. Also, when the UV light is capable to cover only a particular area on the surface of the object, the object needs to be rotated in such a way that the object shall rotate by a particular degree, so that the part which is cured shall move off from exposure of the UV light, and a new part shall be brought in contact for the exposure for UV light. This provides for continuity in curing process by continuously curing complete surface area of the object.

According to a further embodiment of the system, the piston head is adapted to be at least in two states, a heated state when the expansion gas is heated up and expanded, and a cooled state when the expansion gas is cooled down and contracted, such that whenever the piston moves between the states, the piston actuates the movement mechanism to move the object.

The embodiment is beneficial, as it provides the motion of the piston, which helps in moving of the object in a cyclic fashion and which achieves a complete curing of the object.

According to another embodiment of the invention, the expansion gas comprises ethanol.

This embodiment is beneficial, as it provides an expansion gas composition which has expansion coefficient as high as 1/750 per degree Celsius of temperature.

According to a further preferred embodiment of the invention, the system comprises a first reflector placed above the UV lamp, such that the UV lamp is between the first reflector and the movement mechanism, the first reflector is adapted to focus the UV light onto a first surface of the object facing the UV lamp.

This embodiment is beneficial, as it provides for more intensified curing of the surface of an object.

According to another embodiment of the invention, the system comprises a second reflector placed below the movement mechanism, such that the movement mechanism is between the second reflector and the UV lamp, the second reflector is adapted to direct the UV light onto one of a second surface which is facing the second reflector.

This embodiment is beneficial, as it provides an efficient curing of parts of the object, which are not directly facing the UV lamp.

Further benefits, goals and features of the present invention will be described by the following specification of the attached figures, in which components of the invention are exemplarily illustrated. Components of the devices and method according to the inventions, which match at least essentially with respect to their function, can be marked with the same reference sign, wherein such components do not have to be marked or described in all figures.

The invention is just exemplarily described with respect to the attached figure in the following.

### Brief Description of the Drawings

Fig. 1 illustrates a schematic diagram of a UV curing system, according to an embodiment of the invention.
Fig. 2 illustrates the object being cured by rotating the object, according to an embodiment of the invention.
Fig. 3a illustrates the UV curing system during a heated state of a piston head of a piston of the UV curing system, according to an embodiment of the invention.
Fig. 3b illustrates the UV curing system during a cooled state of the piston head of the piston of the UV curing system which is shown in heated state in Fig 3a, according to an embodiment of the invention.
Fig. 4 illustrates a part of the UV curing system having reflectors, according to an embodiment of the invention.

### Detailed Description of the Drawings

The present invention focuses on curing an object using ultra violet (UV) light processing. The invention utilizes the heat energy generated during the curing process for moving the object, so that each surface of the object required to be cured, can be cured by moving the object accordingly in an efficient manner.

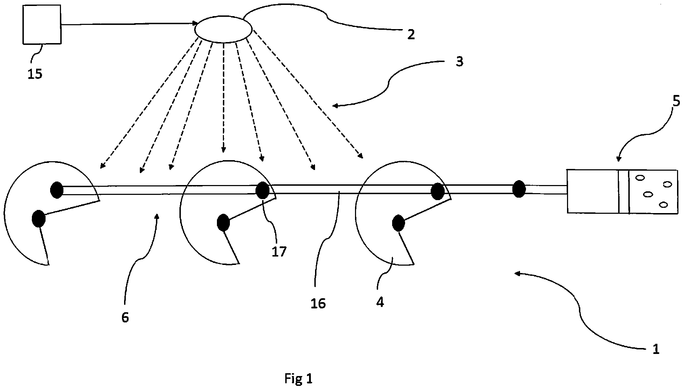

Fig. 1 illustrates a schematic diagram of a UV curing system 1. The UV curing system 1 includes a UV lamp 1, an actuator 5, and a movement mechanism 6. The movement mechanism 6 is provided with a pushing arm 16 which is having attaching provisions 17 for attaching one or more objects 4. The actuator 5 is in movement coupling with the pushing arm 16 of the movement mechanism 6. The UV lamp 2 is placed in such a way, so that the objects 4 are exposed to a UV light 3 generated by the UV lamp 2. The UV lamp 2 also produces heat while generating the UV light 3. This heat energy is utilized by the actuator 5 to convert the heat energy to mechanical energy, and further actuate the movement mechanism 6. The heat generated by the UV light 3 can be received by the actuator 5 using any available heat exchange mechanism, or directly exposing the actuator 5 under the UV light 3.

In an alternate embodiment, the movement mechanism 6 need not have the pushing arm 16 and the attaching provisions 17, however, any other movement mechanism 6 can be used which can sustain heat from the UV lamp 2, for moving the object 4. In one embodiment, the attaching provisions 17 are not required, which helps in holding the objects 4, rather any placement mechanism can be provided which can keep the object in contact while the UV curing is taking place.

The UV system 1 also includes a controller 15 which controls an intensity of the UV light 3 by controlling the UV lamp 2. The controller 15 can control intensity of the UV light 3 at a predefined interval. The change in intensity at pre-defined intervals helps to move the objects timely, so that the curing process is complete and efficient. In 3D objects, all parts of the 3D object are not exposed in one go while being exposed under UV lamp 3. In such a scenario the objects 4 are to be moved in timely fashion, and curing operation completes over a part after a particular amount of time, thereafter another part of the object is to be brought under exposure. The controller 15 can be programmed for such time intervals, so that the object 4 can be automatically moved by the controller 15.

The controller 15 can control intensity of the UV light 3 by a predefined intensity level. Different intensity levels result in variable heat energy and variable conversion of it into mechanical energy, which leads into variable motion by the movement mechanism 6 to the object 4. Every object 4 shall be having different requirements for movement, so that the complete curing operation can be made onto the object 4. In the objects 4 which are 3D, or the objects 4 which are big, or the object 4 which is not required to be cured at all the surfaces, may have to be moved variably, so that the curing operation can take place as required. Hence, programming the controller 15 for desired or predefined intensity level helps to achieve this required functionality of the UV curing.

In an alternate embodiment, the curing operation is not required to be regulated automatically and the controller 15 is not required at all. However, it can be regulated manually to achieve the required curing functionality for various types of objects 4.

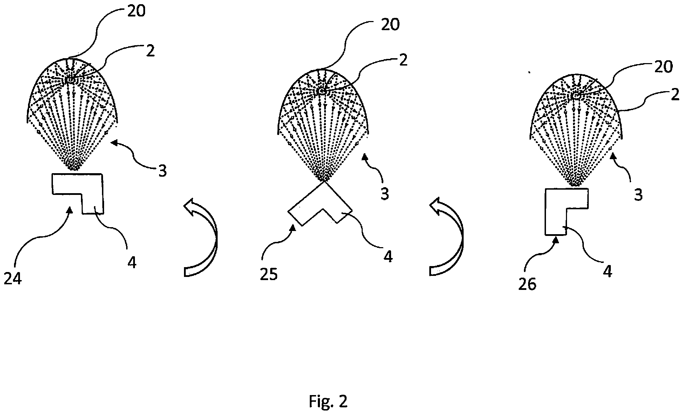

Fig. 2 illustrates the object 4 being cured by rotating the object 4. The objects 4 which are three dimensional, and have shadowing area are difficult to be cured without rotating such objects 4. Rotation of such objects 4 can be actuated by the movement mechanism 4, which on being actuated by the actuator 5 shall move the object is such a way, so that the object rotates. In case, if the movement mechanism received the mechanical energy as translational motion, it converts the motion to a rotational motion, so that the object 4 can be rotated. The object 4 is shown in the figure to be rotated in three positions, a first position 24, a second position 25, and third position 26. At each actuation by the actuator 5, the object 4 moves from one position 24, 25, 26 to another. The transition occurs after the object 4 remains in a particular position for a predefined time period, which helps the object 4 to be exposed in the UV light 3 generated by the UV lamp 2 for a sufficient to complete curing of surfaces of the object 4 in a particular position 24, 25, 26.

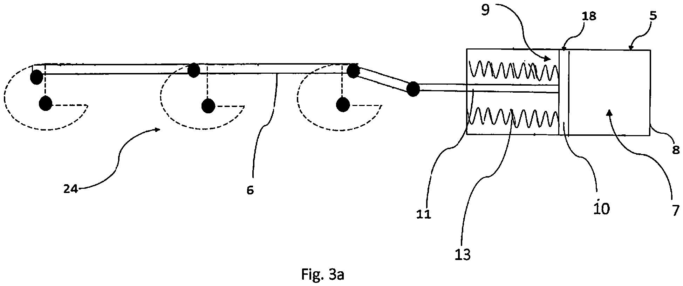

Fig. 3a illustrates the UV curing system 1 during a heated state 18 of a piston head 10 of a piston 9 of the UV curing system 1, according to one embodiment. In this embodiment, the actuator includes a housing 8. The actuator 5 also includes the piston 9, which have the piston head 10 and a piston rod 11. The actuator also includes an expansion gas 7 housed within the housing 8. The expansion gas 7 has high expansion coefficient when exposed to heat. The arrangement of the piston 9 in the housing 8 is such that, the expansion gas 7 is housed in a space between the piston head 10 and one of the walls of the housing 8. The piston rod 11 is attached to the piston head 10, and on other side the piston rod 11 is attached to the movement mechanism 6, such that when the expansion air 7 is expanded when heated up, it exerts a first force onto a surface of the piston head 10, and pushes the piston head 10. Due to pushing of the piston head 10, the piston rod 11 also moves, which further actuates the movement mechanism 6. In figure 3a, the piston head 10 is shown in a heated state 18 which is achieved by pushing of the piston head 10 by the expanded gas 7.

The housing 8 also includes a spring 13 which is attached between one of the walls and the piston head 10. On the piston head 10, the spring 13 is attached to the side on which the piston rod is attached. In an alternate embodiment, the spring can be attached to the side of the piston head 10 which faces the expansion gas 7. The spring 13 exerts a second force onto the piston head 10 in a second direction opposite to the first direction. This helps to keep a check on the movement of piston head 10, which further regulates actuation of the movement mechanism 6. It is to be noted that the second force is smaller than the first force, to move the piston head 10 to the heated state 18. Once, the piston head 10 reaches in the heated state, the forces can be equal and opposite to keep the piston head 10 in equilibrium and stable in the heated state, so that the object can remain in the first position 24, achieved by the movement, for the curing. In an alternate embodiment, the spring is not required, however, any other mechanism can be provided which is efficient in exerting the second force onto the piston head 10.

In one embodiment, the expansion gas 7 can be ethanol, or ethanol mixed with air.

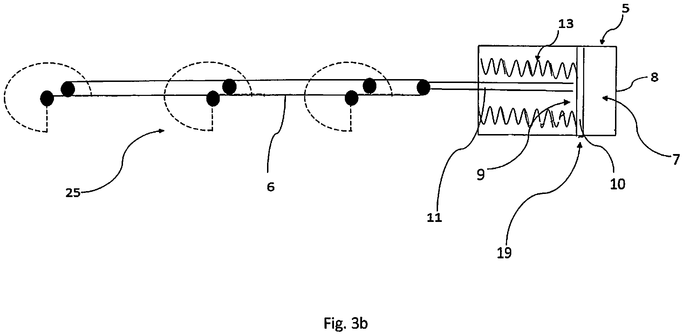

Fig. 3b illustrates the UV curing system 1 during a cooled state 19 of the piston head 10 of the piston 9 of the UV curing system 1. For further movement of the movement mechanism 6, in a cyclic fashion, the expansion gas 7 is required to be cooled down, so that the expansion gas contracts, such that the second force shall be greater than the first force, and the piston head 10 moves from the heated state 18 to the cooled state 19. When the piston head 10 moves, the movement mechanism 6 is also actuated, and changes the position of the object to the second position 25.

In an alternate embodiment, the actuator need not include the ethanol gas 7, and the piston 9, rather any other mechanism, like piezo based mechanism, or any such mechanism can be used which can covert heat energy to the mechanical energy, and can provide movement of the object by actuating the movement mechanism 6.

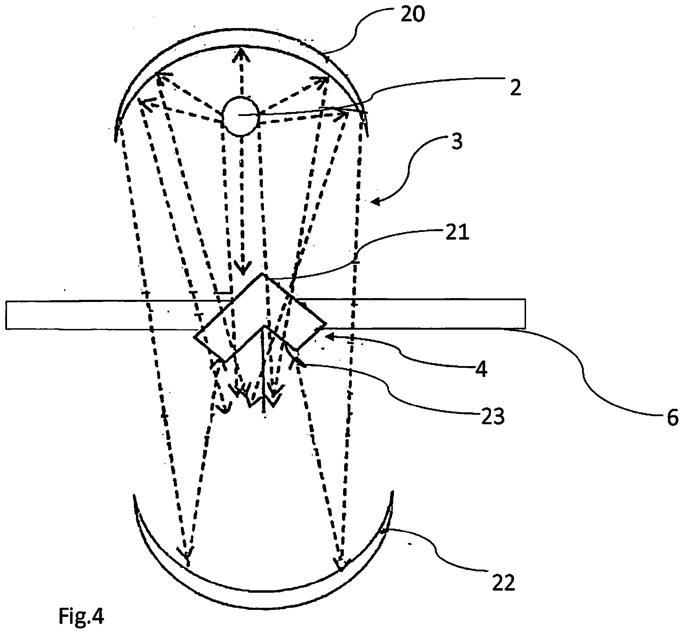

Fig. 4 illustrates a part of the UV curing system 1 having reflectors 20, 22, according to an embodiment of the invention. For providing an intensified curing of the object 4, a first reflector 20 is provided. The first reflector 20 is placed above the UV lamp 2, such that the UV lamp 2 lies in between the first reflector 20 and the movement mechanism 6. The first reflector 20 focuses the UV light 3 onto a first surface 21 of the object 4. The first surface 21 faces the UV lamp 2. For providing simultaneous curing of multiple surfaces of the object 4, the UV curing system 1 also includes a second reflector 22 placed below the movement mechanism 6, such that the movement mechanism 6 is between the second reflector 22 and the UV lamp 2. The second reflector 22 directs the UV light 3 not absorbed by the first surface 21 onto a second surface 23. The second surface 3 faces the second reflector 22. In one embodiment, either of the first reflector 20 or the second reflector 22 is provided, based on the functionality required to be achieved by the UV curing system, i.e., requirement of intensified curing, or curing of both the surfaces at a time. In another alternate embodiment, not of the reflectors 20, 22 are provided.

Thus, the present invention provides for a UV curing system 1 which includes an UV lamp 2 for generating an UV light 3 to cure an object 4 when the object 4 passes under the UV light 3. The UV lamp 2 generates heat while generating the UV light 3. The UV curing system 1 also includes an actuator 5 and a movement mechanism 6. The actuator 5 receives heat from the UV lamp 2, and converts heat energy to mechanical energy and thus actuates the movement mechanism 6. The movement mechanism 6, when actuated, moves the object 4.

### List of reference numbers

- 1: UV curing system
- 2: UV lamp
- 3: UV light
- 4: object
- 5: actuator
- 6: movement mechanism
- 7: expansion gas
- 8: housing
- 9: piston
- 10: piston head
- 11: piston rod
- 13: spring
- 15: information of the problematic vehicle
- 16: pushing arm
- 17: attaching provision
- 18: heated state
- 19: cooled state
- 20: first reflector
- 21: first surface
- 22: second reflector
- 23: second surface
- 24: first position of object
- 25: second position of object
- 26: third position of object

## Claims

1. A UV curing system (1) comprising an UV lamp (2) for generating an UV light (3) to cure an object (4) when the object (4) passes under the UV light (3), wherein the UV lamp (2) is adapted to generate heat while generating the UV light (3), **characterized in that** the UV curing system (1) comprises:
- an actuator (5) adapted to receive heat from the UV lamp (2) and to convert heat energy to mechanical energy and to actuate a movement mechanism (6); and
- the movement mechanism (6), when actuated by the actuator (5), adapted to move the object (4) depending on the generated heat of the UV lamp (2).

2. The UV curing system (1) according to claim 1, wherein the actuator (5) comprises:
- an expansion gas (7) having an high expansion coefficient when exposed to heat, the expansion gas (7) is housed within a housing (8) of the actuator (5); and
- a piston (9) having a piston head (10) and a piston rod (11), the piston head (10) is encapsulated within the housing (8) of the actuator (5), the piston rod (11) is in a coupling to the movement mechanism (6), such that when the exhaustion gas (7) is expanded it exerts a first force onto the piston head (10) in a first direction, and due to the pressure, the piston (9) moves, which actuate the movement mechanism (6).

3. The UV curing system according to the claim 2 comprising:
- a spring (13) adapted to exert a second force onto the piston head (10) in a second direction opposite to the first direction.

4. The UV curing system (1) according to any of the claim 1 to 3 comprising:
- a controller (15) adapted to control intensity of the UV light (3) generated from the UV lamp (2).

5. The UV curing system (1) according to claim 4, wherein the controller (15) is adapted to control intensity of the UV light (3) at a predefined interval.

6. The UV curing system (1) according to the claim 5, wherein the controller (15) is adapted to control intensity of the UV light (3) by a predefined intensity level.

7. The UV curing system (1) according to any of the claims 1 or 6, wherein the movement mechanism (6) comprises a pushing arm (16) with an attaching provision (17) for attaching one or more objects (4), the pushing arm (16) is in the movement coupling with the piston rod (11), wherein the pushing arm (16) is adapted to move in direction of the movement of the piston rod (11), when actuated.

8. The UV curing system (1) according to any of the claims 1 to 7, wherein the movement mechanism (6) is adapted to move one or more objects (4) by rotating at least one object (4).

9. The UV curing system (1) according to the claim 8, wherein the movement mechanism (6) is adapted to rotate the object (4) by a predefined degree once at a time.

10. The UV curing system (1) according to any of the claims 2 to 9, wherein the piston head (10) is adapted to be at least in two states (18, 19), a heated state (18) when the expansion gas (7) is heated up and expanded, and a cooled state (19) when the expansion gas (7) is cooled down and contracted, such that whenever the piston (9) moves between both states (18, 19), the piston (9) actuates the movement mechanism (6) to move the object (4).

11. The UV curing system (1) according to any of the claims 1 to 10, wherein the expansion gas (7) comprises ethanol.

12. The UV curing system (1) according to any of the claims 1 to 11 comprising a first reflector (20) placed above the UV lamp (2), such that the UV lamp (2) is between the first reflector (20) and the movement mechanism (6), the first reflector (20) is adapted to focus the UV light (3) onto a first surface (21) of the object (4) facing the UV lamp (2).

13. The UV curing system (1) according to any of the claims 1 to 12 comprising a second reflector (22) placed below the movement mechanism (6), such that the movement mechanism (6) is between the second reflector (22) and the UV lamp (2), the second reflector (22) is adapted to direct the UV light (3) onto a second surface (23) which is facing the second reflector (22).

## Patentansprüche

1. Ein UV-Härtungssystem (1), das eine UV-Lampe (2) zur Erzeugung eines UV-Lichts (3) zur Härtung eines Objekts (4) umfasst, wenn das Objekt (4) unter dem UV-Licht (3) hindurch geführt wird, wobei die UV-Lampe (2) angepasst ist, um Wärme zu erzeugen, während das UV-Licht (3) erzeugt wird, **dadurch gekennzeichnet, dass** das UV-Härtungssystem (1) umfasst:
- einen Aktuator (5), der dazu geeignet ist, Wärme von der UV-Lampe (2) aufzunehmen und Wärmeenergie in mechanische Energie umzuwandeln und einen Bewegungsmechanismus (6) zu betätigen; und
- der Bewegungsmechanismus (6), wenn er durch den Aktuator (5) betätigt wird, der so angepasst ist, dass er das Objekt (4) in Abhängigkeit von der erzeugten Wärme der UV-Lampe (2) bewegt.

2. Das UV-Härtungssystem (1) nach Anspruch 1, wobei der Aktuator (5) umfasst:
- ein Ausdehnungsgas (7) mit einem hohen Ausdehnungskoeffizienten, wenn es Wärme ausgesetzt wird, wobei das Ausdehnungsgas (7) in einem Gehäuse (8) des Aktuators (5) untergebracht ist; und
- einen Kolben (9) mit einem Kolbenkopf (10) und einer Kolbenstange (11), wobei der Kolbenkopf (10) innerhalb des Gehäuses (8) des Aktuators (5) gekapselt ist, die Kolbenstange (11) mit dem Bewegungsmechanismus (6) gekoppelt ist, so dass das Abgas (7) bei seiner Ausdehnung eine erste Kraft auf den Kolbenkopf (10) in einer ersten Richtung ausübt, und sich der Kolben (9) aufgrund des Drucks bewegt, die den Bewegungsmechanismus (6) betätigt.

3. Das UV-Härtungssystem nach Anspruch 2, bestehend aus:
- einer Feder (13), die geeignet ist, eine zweite Kraft auf den Kolbenkopf (10) in einer zweiten, der ersten Richtung entgegengesetzten Richtung auszuüben.

4. Das UV-Härtungssystem (1) nach einem der Ansprüche 1 bis 3, umfassend: eine Feder (13), die geeignet ist, eine zweite Kraft auf den Kolbenkopf (10) in einer zweiten, der ersten Richtung entgegengesetzten Richtung auszuüben:
- einen Regler (15), der geeignet ist, die Intensität des von der UV-Lampe (2) erzeugten UV-Lichts (3) zu steuern.

5. Das UV-Härtungssystem (1) nach Anspruch 4, wobei die Steuerung (15) angepasst ist, um die Intensität des UV-Lichts (3) in einem vordefinierten Intervall zu steuern.

6. Das UV-Aushärtungssystem (1) nach Anspruch 5, wobei die Steuerung (15) angepasst ist, um die Intensität des UV-Lichts (3) durch ein vordefiniertes Intensitätsniveau zu steuern.

7. Das UV-Härtungssystem (1) nach einem der Ansprüche 1 oder 6, wobei der Bewegungsmechanismus (6) einen Schiebearm (16) mit einer Befestigungsvorrichtung (17) zum Befestigen eines oder mehrerer Objekte (4) umfasst, der Schiebearm (16) in der Bewegungskopplung mit der Kolbenstange (11) steht, wobei der Schiebearm (16) so angepasst ist, dass er sich in Richtung der Bewegung der Kolbenstange (11) bewegt, wenn er betätigt wird.

8. Das UV-Aushärtungssystem (1) nach einem der Ansprüche 1 bis 7, wobei der Bewegungsmechanismus (6) dazu geeignet ist, ein oder mehrere Objekte (4) durch Drehen mindestens eines Objektes (4) zu bewegen.

9. UV-Härtungssystem (1) nach Anspruch 8, wobei der Bewegungsmechanismus (6) so ausgelegt ist, dass er das Objekt (4) um einen vordefinierten Grad einmal auf einmal dreht.

10. Das UV-Härtungssystem (1) nach einem der Ansprüche 2 bis 9, wobei der Kolbenkopf (10) so angepasst ist, dass er sich mindestens in zwei Zuständen (18, 19) befindet, einem erwärmten Zustand (18), wenn das Expansionsgas (7) erwärmt und expandiert wird, und einem gekühlten Zustand (19), wenn das Expansionsgas (7) abgekühlt und zusammengezogen wird, so dass, wann immer sich der Kolben (9) zwischen beiden Zuständen (18, 19) bewegt, der Kolben (9) den Bewegungsmechanismus (6) betätigt, um das Objekt (4) zu bewegen.

11. Das UV-Härtungssystem (1) nach einem der Ansprüche 1 bis 10, wobei das Expansionsgas (7) Ethanol enthält.

12. Das UV-Aushärtungssystem (1) nach einem der Ansprüche 1 bis 11 umfasst einen ersten Reflektor (20), der über der UV-Lampe (2) angeordnet ist, so dass sich die UV-Lampe (2) zwischen dem ersten Reflektor (20) und dem Bewegungsmechanismus (6) befindet, wobei der erste Reflektor (20) so angepasst ist, dass er das UV-Licht (3) auf eine erste Oberfläche (21) des Objekts (4) fokussiert, die der UV-Lampe (2) zugewandt ist.

13. Das UV-Aushärtungssystem (1) nach einem der Ansprüche 1 bis 12 umfasst einen zweiten Reflektor (22), der unter dem Bewegungsmechanismus (6) angeordnet ist, so dass der Bewegungsmechanismus (6) zwischen dem zweiten Reflektor (22) und der UV-Lampe (2) liegt, wobei der zweite Reflektor (22) so angepasst ist, dass er das UV-Licht (3) auf eine zweite Oberfläche (23) richtet, die dem zweiten Reflektor (22) zugewandt ist.

## Revendications

1. Système de durcissement par UV (1) comprenant une lampe UV (2) pour générer une lumière UV (3) pour durcir un objet (4) lorsque l'objet (4) passe sous la lumière UV (3), dans lequel la lampe UV (2) est adaptée pour générer de la chaleur tout en générant la lumière UV (3), **caractérisé en ce que** le système de durcissement par UV (1) comprend :
- un actionneur (5) adapté pour recevoir la chaleur de la lampe UV (2) et pour convertir l'énergie thermique en énergie mécanique et pour actionner un mécanisme de mouvement (6) ; et
- le mécanisme de déplacement (6), lorsqu'il est actionné par l'actionneur (5), adapté pour déplacer l'objet (4) en fonction de la chaleur générée par la lampe UV (2).

2. Le système de séchage UV (1) selon la revendication 1, dans lequel l'actionneur (5) comprend :
- un gaz de dilatation (7) ayant un coefficient de dilatation élevé lorsqu'il est exposé à la chaleur, le gaz de dilatation (7) est logé dans un logement (8) de l'actionneur (5) ; et
- un piston (9) comportant une tête de piston (10) et une tige de piston (11), la tête de piston (10) est encapsulée dans le boîtier (8) de l'actionneur (5), la tige de piston (11) est couplée au mécanisme de déplacement (6), de sorte que lorsque le gaz d'échappement (7) est détendu, il exerce une première force sur la tête de piston (10) dans une première direction, et en raison de la pression, le piston (9) se déplace, ce qui actionne le mécanisme de déplacement (6).

3. Le système de durcissement par UV selon la revendication 2 comprenant :
- un ressort (13) adapté pour exercer une deuxième force sur la tête de piston (10) dans une deuxième direction opposée à la première direction.

4. Système de séchage par UV (1) selon l'une quelconque des revendications 1 à 3, comprenant : un ressort (13) adapté pour exercer une deuxième force sur la tête de piston (10) dans une deuxième direction opposée à la première direction :
- un contrôleur (15) adapté pour contrôler l'intensité de la lumière UV (3) générée par la lampe UV (2).

5. Système de séchage UV (1) selon la revendication 4, dans lequel le contrôleur (15) est adapté pour contrôler l'intensité de la lumière UV (3) à un intervalle prédéfini.

6. Système de séchage UV (1) selon la revendication 5, dans lequel le contrôleur (15) est adapté pour contrôler l'intensité de la lumière UV (3) à un niveau d'intensité prédéfini.

7. Système de séchage par UV (1) selon l'une quelconque des revendications 1 ou 6, dans lequel le mécanisme de déplacement (6) comprend un bras de poussée (16) avec un dispositif de fixation (17) pour fixer un ou plusieurs objets (4), le bras de poussée (16) est en couplage de déplacement avec la tige de piston (11), dans lequel le bras de poussée (16) est adapté pour se déplacer dans la direction du déplacement de la tige de piston (11), lorsqu'il est actionné.

8. Le système de séchage UV (1) selon l'une des revendications 1 à 7, dans lequel le mécanisme de mouvement (6) est adapté pour déplacer un ou plusieurs objets (4) en faisant tourner au moins un objet (4).

9. Le système de séchage UV (1) selon la revendication 8, dans lequel le mécanisme de mouvement (6) est adapté pour faire tourner l'objet (4) d'un degré prédéfini une fois à la fois.

10. Système de durcissement par UV (1) selon l'une quelconque des revendications 2 à 9, dans lequel la tête de piston (10) est adaptée pour être au moins dans deux états (18, 19), un état chauffé (18) lorsque le gaz d'expansion (7) est chauffé et expansé, et un état refroidi (19) lorsque le gaz d'expansion (7) est refroidi et contracté, de sorte que chaque fois que le piston (9) se déplace entre les deux états (18, 19), le piston (9) actionne le mécanisme de mouvement (6) pour déplacer l'objet (4).

11. Le système de durcissement par UV (1) selon l'une des revendications 1 à 10, dans lequel le gaz d'expansion (7) comprend de l'éthanol.

12. Le système de durcissement par UV (1) selon l'une des revendications 1 à 11 comprenant un premier réflecteur (20) placé au-dessus de la lampe UV (2), de sorte que la lampe UV (2) se trouve entre le premier réflecteur (20) et le mécanisme de déplacement (6), le premier réflecteur (20) est adapté pour focaliser la lumière UV (3) sur une première surface (21) de l'objet (4) faisant face à la lampe UV (2).

13. Le système de séchage UV (1) selon l'une des revendications 1 à 12 comprenant un second réflecteur (22) placé sous le mécanisme de mouvement (6), de telle sorte que le mécanisme de mouvement (6) se trouve entre le second réflecteur (22) et la lampe UV (2), le second réflecteur (22) est adapté pour diriger la lumière UV (3) sur une seconde surface (23) qui est en face du second réflecteur (22).
